(19) **Europäisches Patentamt**

**European Patent Office**

**Office européen des brevets**

(11) **EP 0 836 024 B1**

(12) **FASCICULE DE BREVET EUROPEEN**

(45) Date de publication et mention
de la délivrance du brevet:
**26.02.2003 Bulletin 2003/09**

(51) Int Cl.⁷: **F16D 7/04**, B44D 3/06

(21) Numéro de dépôt: **97402365.7**

(22) Date de dépôt: **08.10.1997**

(54) **Tête d'entraînement formant limiteur de couple pour pots de peinture à agitateur**

Antriebskopf mit Drehmomentbegrenzer für Farbtopfrührgefässe

Driving head having a torque limiter for stirring paint pots

(84) Etats contractants désignés:
**BE DE FR GB IT LU NL**

(30) Priorité: **09.10.1996 FR 9612304**

(43) Date de publication de la demande:
**15.04.1998 Bulletin 1998/16**

(73) Titulaire: **Fillon Pichon S.A.**
**28210 Faverolles (FR)**

(72) Inventeurs:
• **Lesimple, Michel Denis**
**28210 Coulombs (FR)**
• **Gaulupeau, Jacky Emile**
**28210 Boullay-Thierry (FR)**

• **Garcia, Thierry Claude Léon**
**78120 Rambouillet (FR)**

(74) Mandataire: **Coester, Jacques Charles**
**Cabinet Madeuf**
**56 A, rue du Faubourg Saint-Honoré**
**75008 Paris (FR)**

(56) Documents cités:
**EP-A- 0 409 715**      **EP-A- 0 461 326**
**AU-A- 2 846 767**      **DE-A- 4 344 151**
**DE-C- 809 877**      **US-A- 2 854 830**
**US-A- 3 406 583**      **US-A- 3 745 790**
**US-A- 4 043 437**      **US-A- 4 327 563**
**US-A- 5 542 761**

## Description

L'invention concerne les armoires agitatrices pour pots de peinture. Ces armoires comportent généralement plusieurs étages délimités par des plateaux creux à l'intérieur desquels sont disposées des poulies d'entraînement pour des têtes agitatrices qui sont amenées en prise avec une partie complémentaire d'un pot de peinture à agiter.

D'une façon générale, toutes les têtes agitatrices d'une même armoire sont entraînées simultanément et les utilisateurs des pots de peinture saisissent l'un ou l'autre pot puis le remettent en place sans avoir à prendre de précaution particulière et sans qu'il en résulte une interruption du fonctionnement de la tête agitatrice correspondante.

La technique antérieure a notamment fait connaître les documents EP-A-0 461 326 et DE-A-4 344 151.

L'invention concerne un dispositif qui permet de limiter le couple pouvant être transmis par chaque tête agitatrice pour qu'aucun risque d'accident ou d'incident ne puisse survenir.

L'invention vise, en outre, à simplifier grandement la fabrication des pièces constitutives des têtes agitatrices pour réduire les frais d'installation et d'entretien.

Selon l'invention, les pièces constitutives des têtes agitatrices sont assemblées sans utilisation d'aucun outil et leur fonctionnement ne nécessite aucun lubrifiant. De plus, l'action limitatrice de couple se produit sans bruit et sans qu'il y ait à provoquer un réenclenchement.

Les revendications annexés ont ainsi été rédigées en considération de EP-A-0 461 326 pris comme art antérieur le plus proche.

Diverses caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une perspective éclatée d'une armoire pour pots de peinture à agitateur.

La fig. 2 est une coupe-élévation transversale d'une des têtes agitatrices que comporte l'armoire de la fig. 1.

La fig. 3 est une coupe prise suivant la ligne III-III de la fig. 2.

La fig. 4 est une perspective d'un des organes de la tête agitatrice.

La fig. 5 est une perspective éclatée d'une tête agitatrice suivant une variante de réalisation.

Les fig. 6a à 6c sont des représentations de positions stables et instables de rotation pendant les phases d'entraînement.

Les fig. 7a à 7c représentent une schématisation des efforts exercés sur une patte élastique du dispositif d'entraînement.

Les fig. 8 à 8c sont des représentations de différents profils possibles pour l'axe d'entraînement.

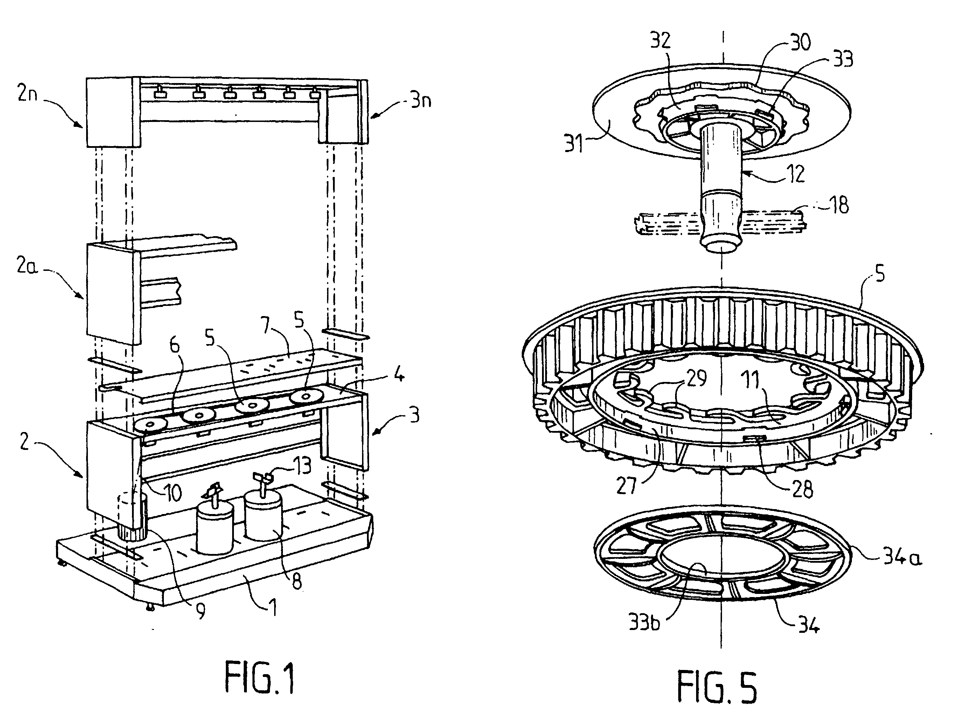

La fig. 1 montre une armoire comportant un socle 1 muni, sur son dessus, de côtés latéraux 2, 3 dont la hauteur peut être quelconque, lesdits côtés latéraux étant avantageusement constitués par des segments successifs 2, 2a ... 2n; 3, 3a ... 3n.

Les côtés latéraux ci-dessus ou, de préférence, les segments, tels que 2, 3, sont réunis par des plaques 4 supportant des poulies 5 reliées entre elles par un élément de transmission sans fin 6, par exemple une courroie dentée. Les poulies sont recouvertes par un plateau 7 constituant un couvercle et un support.

Comme le montre le dessin, des pots de peinture 8 sont posés sur le socle 1 et des pots analogues sont mis en place sur le couvercle 7 recouvrant les poulies 5.

L'armoire peut comporter un nombre quelconque d'étages délimités à chaque fois par une plaque 4 et un plateau 7 7 entre lesquels sont disposées les poulies 5. Les poulies 5 des différents étages sont entraînées par un moteur électrique 9 relié à chaque étage au moyen d'un arbre 10 ou analogue.

Chaque poulie 5 comporte un moyeu 11 destiné à assurer l'entraînement d'un arbre 12 d'une tête agitatrice 13 correspondant à chaque poulie 5.

Comme l'illustre la fig. 1, chaque tête agitatrice 13 est destinée à coopérer avec la tête d'un arbre agitateur 12 dont est muni chaque pot 8.

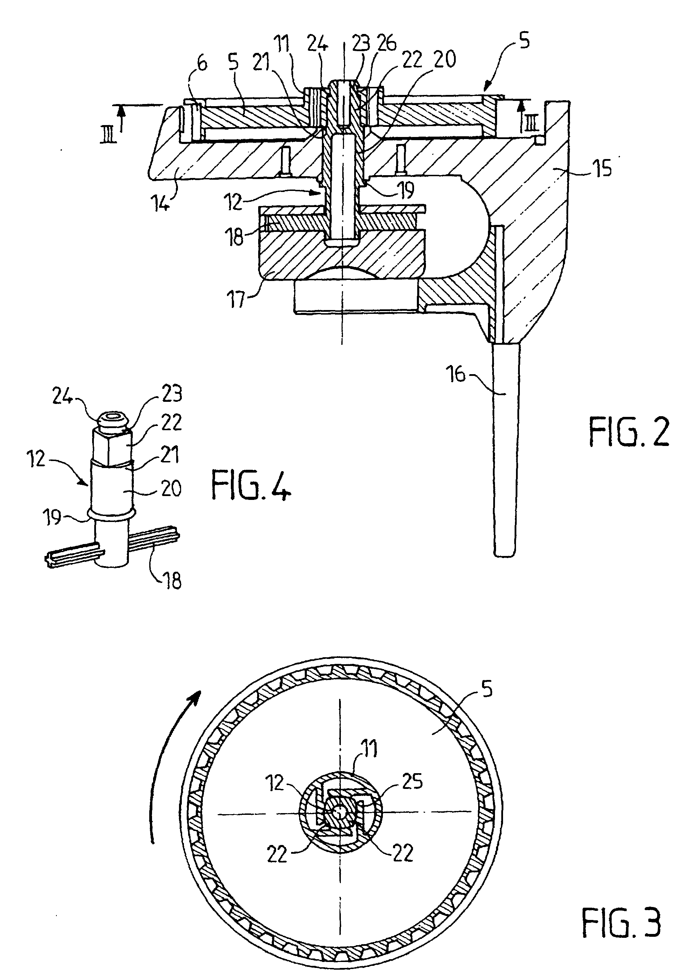

Les fig. 2 à 4 illustrent une réalisation dans laquelle les têtes agitatrices sont prévues pour permettre l'entraînement en rotation d'un arbre agitateur tout en faisant en sorte que le pot soit empêché de tourner.

L'arbre agitateur comporte, à cette fin, un socle 14 délimitant un col de cygne 15 comportant une butée 16 empêchant l'entraînement en rotation d'un pot 8 correspondant. Chaque socle 14 est porté par la plaque 4 de chaque étage de l'armoire.

L'arbre agitateur 12 du pot 8 est entraîné de manière connue en soi par une palette 17 montée de façon saillante sur un axe 18 porté transversalement par l'arbre 12 près de sa partie inférieure.

L'arbre 12 comporte, au-dessus de l'axe 18, un anneau 19 venant en appui contre le dessous du socle 14 qu'il traverse par une partie de plus grand diamètre 20. Au-dessus de la partie de plus grand diamètre 20, l'arbre 12 délimite un épaulement 21 s'étendant à la base d'un tronçon 22 présentant une forme, en section, différente d'un cylindre. La forme peut être polygonale à n côtés convexes, par exemple quatre côtés.

Au-dessus du tronçon 22, l'arbre 12 délimite une gorge 23 et un embout 24.

La fig. 3 montre que le moyeu 11 de la poulie 5 est muni intérieurement de pattes 25 destinées à prendre appui contre le tronçon 22. Par ailleurs, chaque poulie 5 présente, en regard de la gorge 23 de l'arbre, un collet 26.

Il est avantageux de fabriquer les poulies 5 telles que décrites en une matière synthétique moulée présentant une bonne qualité d'élasticité. Des polyacétales peuvent être utilisés à cette fin de même que des polyamides, ce qui fait que les pattes 25 du moyeu 11 sont élastiques. L'arbre 12 peut aussi être réalisé en matière plastique.

Lorsqu'un pot de peinture 8 est amené en prise avec la palette 17 par sa tête agitatrice 13, celle-ci est normalement entraînée en rotation en même temps que les différentes poulies 5 que comporte chaque étage de l'armoire.

La pression exercée par les pattes 25 sur le tronçon 22 de l'arbre 12 fait que cet arbre est normalement entraîné et qu'il transmet, en conséquence, son mouvement à la tête agitatrice correspondante 13.

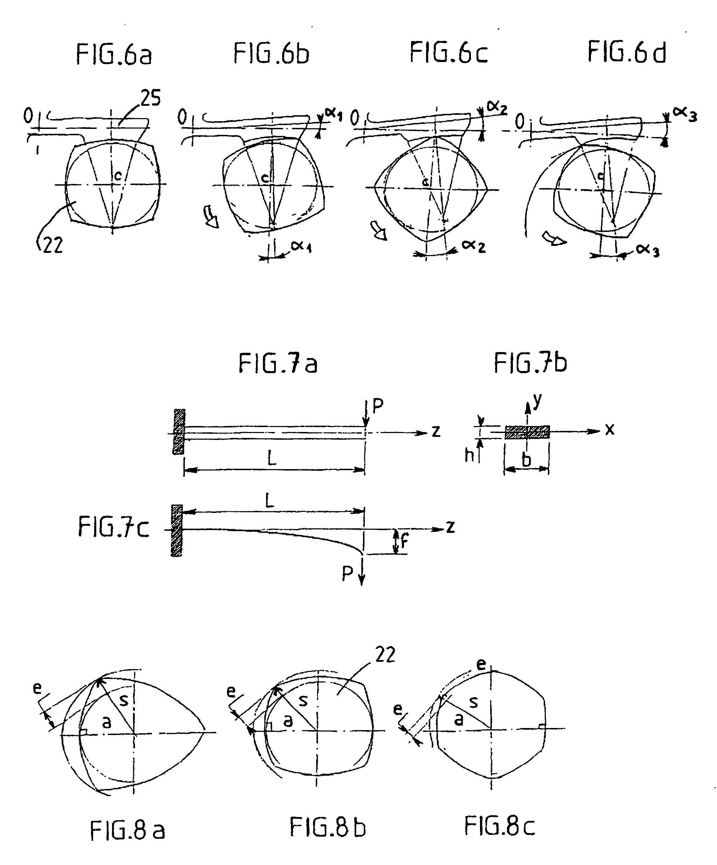

Aux fig. 6a à 6d, qui représentent des positions stables et instables de rotation pendant les phases d'entraînement, la fig. 6a montre la position unique stable initiale sans déclenchement du limiteur de couple, tandis que les fig. 6b, 6c et 6d montrent trois positions intermédiaires instables respectivement droite, médiane et gauche lors d'un déclenchement du limiteur de couple.

Ainsi, si, pour un motif quelconque, le couple à appliquer à l'arbre 12 croît, par exemple du fait d'une mauvaise présentation d'un pot 8 ou si, du fait d'une maladresse, un opérateur se saisit de la palette 17, où encore une peinture solidifiée dans le pot, alors cette augmentation de couple a pour effet que les pattes 25 glissent par rapport au tronçon 22.

Aux fig. 7a à 7c qui représentent une schématisation des efforts exercés par une patte élastique 25 du dispositif d'entraînement, les fig. 7a à 7b montrent une poutre encastrée, respectivement en vue de face et en vue de côté, tandis que la fig. 7c illustre la flexion de cette poutre soumise à un effort à l'extrémité libre de la poutre.

En effet, les pattes élastiques 25 agissent comme un ensemble de poutres encastrées sollicitées en flexion. Dans ce cas précis, où il s'agit d'une poutre encastrée à une extrémité dont l'effort est appliqué à l'autre extrémité libre, l'équation de la flèche est donnée par la relation :

$$(1) \qquad f = P.L^3/3\ E.Ix$$

Avec : Ix = b.h³/12, dans le cas simplifié d'une poutre à section rectangulaire, E étant le module d'Young et Ix l'inertie de la poutre par rapport à l'axe x.

En outre en se référant au dessin :

P = Effort à l'extrémité de la poutre perpendiculaire à l'axe z.
f = flèche de l'extrémité de la poutre.
L = longueur de la poutre.
b = largeur de la section droite de la poutre dans l'axe x.

h = hauteur de la section droite de la poutre dans l'axe y.

La variabilité de l'effort résistant dépend principalement des modifications subtiles des paramètres de la relation (I) et de la recherche d'un équilibre judicieux entre-eux.

Par contre, la progressivitré du limiteur de couple dépend de la répartition des efforts résistants sur un nombre de pattes élastiques donné. En effet, la section de l'abre 12 influence directement la valeur de la flèche en raison du rayon d'évolution plus ou moins grand d'un point sommet de sa géométrie polygonale par exemple.

Aux fig. 8a à 8c qui représentent différent profils possibles de la partie 22 de l'abre d'entraînement 12, la fig. 8a montre une forme triangulaire à côtés bombés . La fig. 8b montre la forme carrée à côtés bombés illustrée à la fig. 3, tandis que la fig. 8c montre une forme hexagonale à côtés bombés.

Au dessin, on a :

S = Rayon du cercle d'évolution d'un point sommet du polygone en mm.
a = Rayon du cercle inscrit au polygone (apothème) en mm.
e = Ecart (e = S - a) en mm.

Comme le montre les schémas des fig. 8a à 8c, qui illustrent la variation de e selon les divers profils, la forme bombée donnée avantageusement aux côtés du tronçon polygonal 22 fait que l'ensemble pattes 25 - tronçon 22 agit comme un accouplement limiteur de couple à fonction progressive.

Cette fonction progressive à deux possibilités d'être mise en oeuvre :

- soit tous les paramètres de la relation (I) ci-dessus sont figés et on joue sur le nombre de pattes élastiques et leur géométrie donc sur la forme de l'arbre 12 ;

- soit la géométrie de l'arbre 12 est figée et on joue sur les paramètres de la relation (I), hauteur, largeur, longueur, matériau ou section de la structure des pattes élastiques 25.

On obtient ainsi, dans les deux cas précédents, une progressivité de l'effort transmis dans une position instable de rotation lors du déclenchement du limiteur de couple pendant l'entraînement.

Le mode de réalisation décrit permet un montage extrêmement rapide. En effet, il suffit d'engager l'arbre 12 dans le socle 14 pour y introduire la partie de plus grand diamètre 20. L'opération suivante consiste à enfiler la poulie 5 jusqu'au moment où le collet 26 pénètre dans la gorge 23 par déformation élastique.

La fig. 5 illustre une variante selon laquelle le moyeu 11 de la poulie 5 est formé à la partie haute d'une portée circulaire 27 comportant, près de son bord inférieur, des protubérances 28.

Le moyeu 11 est muni intérieurement de pattes recourbées 29 destinées à coopérer avec une couronne ondulée 30 formée en dessous d'un disque 31. Le nombre d'ondulations de la couronne 30, qui comprend une succession de formes convexes et concaves, correspond de préférence au nombre de pattes 29.

Dans cette réalisation, l'arbre 12, muni de son axe transversal 18, fait saillie en dessous de la couronne ondulée.

Outre ce qui précède, une portée cylindrique 32 dépasse en dessous de la couronne ondulée 30 et est munie de pattes de clipsage 33.

La fig. 5 montre aussi une couronne 34 dont le diamètre extérieur 34a correspond au diamètre de la portée circulaire 27 de la poulie 5 et dont le diamètre intérieur 34b correspond au diamètre de la portée cylindrique 32.

Comme dans l'exemple précédent, les différentes pièces décrites sont avantageusement réalisées en matière synthétique moulée.

Pour assurer l'assemblage, le disque 31 est amené sur le dessus de la poulie 5, ce qui a pour effet de mettre la couronne ondulée 30 en regard des pattes recourbées 29. La portée cylindrique 32 est alors au même niveau que la portée circulaire 27.

En engageant la couronne 34 entre la portée cylindrique 32 et la portée circulaire 27, le disque 34 est verrouillé axialement par les protubérances 28 et les pattes de clipsage 33 sans gêner le mouvement de rotation qui peut, éventuellement, se produire.

L'entraînement de la poulie 5 a pour effet que les pattes recourbées 29 qui correspondent aux ondulations de la couronne 30 provoquent l'entraînement de cette dernière et, par conséquent, de l'arbre 12. Si une augmentation du couple appliqué à l'arbre 12 apparaît excessive, les ondulations de la couronne 30 échappent en faisant plier élastiquement les pattes recourbées 29. L'entraînement est à nouveau assuré si le couple résistant décroît.

Comme on le voit en outre à la fig. 3, les pattes 25 présentent à leur extrémité une concavité tournée vers la convexité du tronçon d'arbre 22 qui dans cet exemple a une forme convexe à quatre côtés.

On comprend aisément que de tels moyens fournissent un recalage induit automatique permettant un indexage naturel sur une position stable de rotation lors de l'entraînement. L'arbre 12 étant constamment ramené dans une position initiale de repos.

Les fig. 6a à 6d montrent aussi que pour éviter une immobilisation de l'arbre dans une position intermédiaire, en aucun cas la direction de l'effort normal au point de contact sur le tronçon 22 ne passe par l'axe de rotation de la tête d'entraînement. On empêche alors une position d'équilibre statique qui peut endommager le limiteur de couple ou annuler l'effet de progressivité recherché. Par ailleurs, les efforts de frottement qui peuvent en pratique retenir la tête d'entraînement sont compensés par les efforts permanents exercés par les pattes élastiques 25 dans toutes les positions intermédiaires statiques.

L'entraînement de sécurité débrayable ci-dessus a ainsi la particularité d'agir comme un accouplement semi-élastique au démarrage et en cas de légères surcharges avant d'atteindre son couple de débrayage.

Les pattes 25 sur la partie 22 étant élastiques encaissent les acoups par flexibilité tout en assurant l'entraînement de l'axe 12.

L'invention n'est pas limitée aux exemples de réalisation, représentés et décrits en détail, car diverses modifications peuvent y être apportées sans sortir du cadre des revendications. Ainsi, bien que dans les figures ci-dessus les sections polygonales du tronçon 22 de l'arbre 12 présentent des côtés convexes, on ne sortirait pas du cadre de l'invention en prévoyant que ces sections sont concaves, les pattes 25 présentant alors à leur extrémité une convexité tournée vers la concavité du tronçon d'arbre.

## Revendications

1. Dispositif d'entraînement formant limiteur de couple pour pots de peinture à agitateur disposés dans une armoire, ce dispositif comportant une poulie (5) entraînée en rotation et reliée à un arbre en rotation (12) portant un axe transversal (18) d'actionnement de la tête agitatrice (13) du pot de peinture, et étant **caractérisé en ce que** ladite poulie est reliée à l'arbre (12) par un ensemble de pattes élastiques (25, 29) saillant à partir d'un moyeu (11) de ladite poulie (5) et agissant contre un tronçon (22, 30) non circulaire de cet arbre, le dispositif étant agencé de telle sorte qu'une augmentation de couple a pour effet que les pattes élastiques glissent par rapport au tronçon, en fournissant des moyens d'amortissement pour permettre une progressivité de l'effort transmis dans une position instable de rotation lors du déclenchement du limiteur de couple pendant l'entraînement, ainsi que des moyens induits de recalage automatique permettant un indexage naturel sur une position stable de rotation lors de l'entraînement.

2. Dispositif d'entraînement suivant la revendication 1, **caractérisé en ce que** le tronçon (22) non circulaire de l'arbre (12) présente de préférence une forme polygonale convexe à n côtés, par exemple quatre côtés, de manière à créer lesdits moyens d'amortissement.

3. Dispositif d'entraînement suivant la revendication 2, **caractérisé en ce que** le tronçon non circulaire de l'arbre présente une forme polygonale, les côtés du polygone étant convexes.

**4.** Dispositif d'entraînement suivant la revendication 2, **caractérisé en ce que** les pattes (25) présentent une concavité tournée vers la convexité du tronçon d'arbre (22), ou réciproquement, de manière à créer lesdits moyens induits de recalage automatique.

**5.** Dispositif d'entraînement suivant la revendication 1, **caractérisée en ce que** l'arbre (12) comporte une couronne ondulée (30), succession de forme convexes et concaves, formée en dessous d'un disque (31) reposant sur la poulie (5), l'ensemble de pattes élastique étant formé par des pattes recourbées (29) saillant du moyeu (11) et en prise avec la couronne ondulée (30) en dessous desquelles l'arbre (12) fait saillie.

**6.** Dispositif d'entraînement suivant la revendication 5, **caractérisée en ce que** la couronne ondulée (30) et la poulie (5) sont reliées ensemble par une couronne (34) clipsée sur une portée cylindrique (32) dépassant en dessous de la couronne ondulée (30) et à l'intérieur d'une portée circulaire (27) munie de protubérances de retenue (28).

**7.** Dispositif d'entraînement suivant l'une des revendications 1 à 6, **caractérisée en ce que** l'arbre (12) est centré dans un socle (14) par une partie de grand diamètre (20), ledit arbre étant maintenu axialement entre un anneau (19) qu'il comporte et un embout (24) clipsé dans un collet (26) de la poulie (5).

**8.** Dispositif d'entraînement suivant l'une des revendications 1 à 7, **caractérisée en ce que** la poulie (5) est conformée pour être entraînée par une courroie dentée.

**9.** Dispositif d'entraînement suivant l'une des revendications 1 à 8, **caractérisée en ce que** le socle (14) de chaque tête forme un col de cygne (15) supportant une butée (16) empêchant la rotation du pot de peinture.

**Patentansprüche**

**1.** Antriebsvorrichtung zur Momentbegrenzung für in einem Schrank angeordnete Farbtöpfe mit Rührer, wobei die Vorrichtung eine Antriebsscheibe (5) umfasst, die zur Rotation angetrieben wird und mit einer Rotationswelle (12) verbunden ist, mit einer Querachse (18) zur Betätigung des Rührkopfes (13) des Farbtopfes und **dadurch gekennzeichnet, dass** die Antriebsscheibe mit der Welle (12) durch eine Anordnung von elastischen Elementen (25, 29) verbunden ist, die von einer Nabe (11) der Antriebsscheibe (5) hervorstehen und gegen einen nicht kreisförmigen Abschnitt (22, 30) der Welle wirken, wobei die Vorrichtung derart eingerichtet ist, dass eine Erhöhung des Moments bewirkt, dass die elastischen Elemente sich in Bezug auf den Abschnitt verschieben, wobei sich Dämpfungsmittel ergeben, um ein Fortschreiten der übertragenen Kraft in einer instabilen Rotationsposition bei der Auslösung des Momentbegrenzers während des Antriebs zu ermöglichen, sowie Mittel zur automatisch induzierten Rücksetzung, die eine natürliche Festsetzung auf eine stabile Rotationsposition beim Antrieb ermöglichen.

**2.** Antriebsvorrichtung nach Anspruch 1, **dadurch gekennzeichnet, dass** der nicht kreisförmige Abschnitt (22) der Welle (12) bevorzugt eine konvexe polygonale Form mit n Seiten aufweist, beispielsweise vier Seiten, um die Dämpfungsmittel zu schaffen.

**3.** Antriebsvorrichtung nach Anspruch 2, **dadurch gekennzeichnet, dass** der nicht kreisförmige Abschnitt der Welle eine polygonale Form aufweist, wobei die Seiten des Polygons konvex sind.

**4.** Antriebsvorrichtung nach Anspruch 2, **dadurch gekennzeichnet, dass** die Elemente (25) eine zur konvexen Form des Abschnitts der Welle (22) gewandte konkave Form aufweisen, oder umgekehrt, um die Mittel zur induzierten automatischen Rückstellung zu schaffen.

**5.** Antriebsvorrichtung nach Anspruch 1, **dadurch gekennzeichnet, dass** die Welle (12) einen gewellten Kranz (30) aufweist, mit einer Abfolge von konvexen und konkaven Formen, unter einer Scheibe (31) ausgebildet, die auf der Antriebsscheibe (5) ruht, wobei die Anordnung von elastischen Elementen durch gebogene Elemente (29) gebildet ist, die von der Nabe (11) hervorstehen und mit dem gewellten Kranz (30) in Eingriff stehen, unter denen die Welle (12) hervorsteht.

**6.** Antriebsvorrichtung nach Anspruch 5, **dadurch gekennzeichnet, dass** der gewellte Kranz (30) und die Antriebsscheibe (5) durch einen Kranz (34) miteinander verbunden sind, der auf einen zylindrischen Träger (32) aufgesteckt ist, der unter dem gewellten Kranz (30) verläuft und im Inneren eines kreisförmigen Trägers (27), der mit Haltevorsprüngen (28) ausgerüstet ist.

**7.** Antriebsvorrichtung nach einem der Ansprüche 1 bis 6, **dadurch gekennzeichnet, dass** die Welle (12) in einem Sockel (14) mit einem Teil von großem Durchmesser (20) zentriert ist, wobei die Welle axial zwischen einem Ring (19), den sie trägt, und einem in einen Rand (26) der Antriebsscheibe (5) gesteckten Ansatz (24) gehalten ist.

**8.** Antriebsvorrichtung nach einem der Ansprüche 1 bis 7, **dadurch gekennzeichnet, dass** die Antriebsscheibe (5) so ausgebildet ist, dass sie durch einen Zahnriemen angetrieben wird.

**9.** Antriebsvorrichtung nach einem der Ansprüche 1 bis 8, **dadurch gekennzeichnet, dass** der Sockel (14) jedes Kopfes einen Schwanenhals (15) bildet, der einen Anschlag (16) trägt, der die Rotation des Farbtopfes verhindert.

**Claims**

**1.** A drive system forming a torque limiter for agitator-equipped pots of paint disposed in a cabinet, said system comprising a pulley (5) driven in rotation and connected to a rotating shaft (12) carrying a transverse pin (18) for actuating the agitator head (13) of the pot of paint, and being **characterised in that** the said pulley is connected to the shaft (12) by a set of elastic lugs (25, 29) projecting from a hub (11) of the said pulley (5) and acting against a non-circular section (22, 30) of said shaft, the system being so arranged that an increase in torque has the effect that the elastic lugs slide with respect to the section, providing damping means to allow a progressive configuration of the force transmitted in an unstable position of rotation on the triggering of the torque limiter during the drive, and induced automatic resetting means allowing a natural indexing to a stable position of rotation when the drive takes place.

**2.** A drive system according to claim 1, **characterised in that** the non-circular section (22) of the shaft (12) preferably has a convex polygonal shape with $n$ sides, for example four sides, so as to create the said damping means.

**3.** A drive system according to claim 2, **characterised in that** the non-circular section of the shaft has a polygonal shape, the sides of the polygon being convex.

**4.** A drive system according to claim 2, **characterised in that** the lugs (25) have a concavity facing the convexity of the shaft section (22), or vice-versa, so as to create the said induced automatic resetting means.

**5.** A drive system according to claim 1, **characterised in that** the shaft (12) comprises a corrugated ring (30), a succession of convex and concave shapes, formed beneath a disc (31) resting on the pulley (5), the set of elastic lugs being formed by curved lugs (29) projecting from the hub (11) and in engagement with the corrugated ring (30) beneath which the shaft (12) projects.

**6.** A drive system according to claim 5, **characterised in that** the corrugated ring (30) and the pulley (5) are connected together by a ring (34) clipped on a cylindrical surface (32) projecting beneath the corrugated ring (30) and inside a circular surface (27) provided with retaining projections (28).

**7.** A drive system according to any one of claims 1 to 6, **characterised in that** the shaft (12) is centred in a plinth (14) by a large-diameter part (20), said shaft being held axially between a ring (19) that it comprises and an end (24) clipped in a collar (26) of the pulley (5).

**8.** A drive system according to any one of claims 1 to 7, **characterised in that** the pulley (5) is shaped to be driven by a toothed belt.

**9.** A drive system according to any one of claims 1 to 8, **characterised in that** the plinth (14) of each head forms a swan-neck (15) supporting a stop (16) preventing rotation of the pot of paint.

FIG.5

FIG.1

FIG.2

FIG.4

FIG.3

FIG.6a    FIG.6b    FIG.6c    FIG.6d

FIG.7a    FIG.7b

FIG.7c

FIG.8 a    FIG.8 b    FIG.8c